# EUROPEAN PATENT SPECIFICATION

(11) **EP 1 747 912 B1**
(45) Date of publication and mention of the grant of the patent: **08.04.2009**
(21) Application number: 06015590.0
(22) Date of filing: 26.07.2006
(51) Int. Cl.: B60B 27/02, B62K 25/02

(54) **Fastening mechanism for bicycle hub**
Fixierungsvorrichtung für Fahrradnabe
Dispositif de fixation pour moyeu de cycle

(30) Priority: 29.07.2005 JP 2005220736
(43) Date of publication of application: 31.01.2007
(73) Proprietor: SHIMANO INC., Osaka 590-8577 (JP)
(72) Inventor: Urabe, Hiroyuki, Sakai City Osaka 590-8577 (JP)
(74) Representative: Harrison, Robert John

(56) References cited:
- EP-A- 1 452 435
- GB-A- 2 126 961
- GB-A- 190 914 162
- US-A- 4 964 287

## Description

### BACKGROUND OF THE INVENTION

### Field of the Invention

This invention generally relates to a bicycle hub fastening structure. More specifically, the present invention relates to a bicycle hub fastening structure that is configured to mount a bicycle hub to a frame of a bicycle.

### Background Information

Bicycling is becoming an increasingly more popular form of recreation as well as a means of transportation. Moreover, bicycling has become a very popular competitive sport for both amateurs and professionals. Whether the bicycle is used for recreation, transportation or competition, the bicycle industry is constantly improving the various components of the bicycle. One component that has been extensively redesigned is the bicycle drive train.

An internally geared bicycle hub (one example of a bicycle hub) comprises a hub axle capable of being mounted to a frame of a bicycle, a generally cylindrical driver mounted in a freely rotatable manner to the hub axle, a generally cylindrical hub shell arranged around the outside circumference of the hub axle, and a transmission mechanism having a plurality of power transmission paths and configured to transmit rotation of the driver to the hub shell through anyone of the power transmission paths. Some internally geared hubs have a sleeve-like gear change operating body for executing gear change operations mounted rotatably on the external circumferential surface of the hub axle (for example, see Japanese Patent No. 3184230). The gear change operating body is arranged to rotate integrally with a cable anchoring body that is arranged such that a ball pushing unit is disposed between the cable anchoring body and the gear change operating body. The gear change operating body is configured to control the on-off status of a plurality of clutches at each rotational phase and thus must be arranged at a prescribed position in the circumferential direction. Consequently, internally geared hubs having this kind of gear change operating body mounted on the external circumferential surface of the hub axle require the hub axle to be mounted to the frame of the bicycle in a prescribed circumferential orientation (rotational direction) in such a fashion that the hub axle is prevented from rotating.

A conventional hub fastening mechanism for fastening an internally geared hub to a bicycle frame has a nut and a rotation prevention washer (an example of a rotation prevention member). A pair of parallel chamfered sections is provided on the hub axle and the rotation prevention washer has an elongated hole configured to engage non-rotatably with the chamfered sections. The engagement of the rotation prevention washer with the chamfered sections of the hub axle prevents rotation of the rotation prevention washer relative to the hub axle. The rotation prevention washer also has a protrusion configured to engage with a hub mounting groove formed in the frame so as to prevent rotation of the rotation prevention washer with respect to the frame. As a result, due to the engagement of the rotation prevention washer with the chamfered sections of the hub axle and the hub mounting groove of the frame, the hub axle is held in a prescribed rotational position relative to the frame. With the hub axle and rotation prevention washer thus arranged, the nut is installed on the axially outward facing side of the rotation prevention washer and tightened so as to press the rotation prevention washer against the frame, thereby fastening the hub axle to the frame in a prescribed rotational position.

In another known hub fastening mechanism, a washer is connected in a freely rotatable fashion to a nut configured to be attached the hub axle with a threaded connection (see, for example, page 152 of 2005 Bicycle Components Trade Sales & Support Manual, published July 2004 by Shimano, Inc.). The nut has a swage fastening part comprising a thinner-walled cylindrical section formed on the axially inward facing end face thereof. The washer is mounted on the swage fastening part and the swage fastening part is swaged (plastically deformed) in the radially outward direction so as to assume a tapered shape, thereby connecting the washer to the nut in such a fashion that the washer can rotate freely.

With the first conventional hub fastening mechanism described above, it is necessary to attach the washer to the hub axle and connect the hub axle non-rotatably to the frame before the nut is installed and tightened on the hub axle to fasten the hub to the frame. Consequently, the process of fastening the hub to the frame is cumbersome and there is the possibility that the nut will be installed alone while forgetting to install the washer. If the washer is initially forgotten, the installer must remove the nut from the hub axle, install the washer onto the hub axle, and then reinstall the nut in order to correct the mistake, thus further complicating the task of fastening the hub to the frame and adversely affecting the installation efficiency.

Document US-A-4 964 287 discloses an apparatus provided for connecting a wheel to a bicycle frame. A hub is rotatably connected to the fork portion of the bicycle frame. A drawbar acting as an axle passes through a central longitudinal bore in hub and is captured at each end respectively by a cap nut and housing. Intermediate the cap nut and fork is a lockdown washer. Lockdown washer includes a raised portion extending within the fork portion whereby rotation therebetween is prevented. A raised knurled portion extends longitudinally from the lockdown washer and mates with a corresponding recessed knurled portion within the cap nut. Correspondingly, between the housing and fork portion, a second lockdown washer is disposed. The lockdown washer also includes a raised portion extending into the frame whereby rotation is prevented therebetween.

Document GB 14162 A discloses a bicycle hub fastening structure according to the preamble of claim 1.

In view of the above, it will be apparent to those skilled in the art from this disclosure that there exists a need for an improved bicycle hub fastening structure. This invention addresses this need in the art as well as other needs, which will become apparent to those skilled in the art from this disclosure.

### SUMMARY OF THE INVENTION

In order to avoid the shortcomings of the conventional hub fastening mechanism, it is conceivable to employ the second hub fastening mechanism described above and attach a rotation prevention washer to the nut. However, if a protrusion for engaging with the frame is provided on the rotation prevention washer, the protrusion will get in the way when the crimp fastening part of the nut is crimped in order to connect the rotation prevention washer to the nut, making it difficult to connect the rotation prevention washer to the nut using crimping.

One object of the present invention is to provide a bicycle hub fastening structure that employs an easy-to-connect connecting structure in order to improve the ease and efficiency with which a bicycle hub is fastened to a bicycle frame.

The foregoing objects can basically be attained by providing a bicycle hub fastening structure in accordance with a first aspect of the present invention that comprises a nut member, a rotation prevention member and a connecting part. The nut member includes an internally threaded bore and a first contact surface. The rotation prevention member includes a second contact surface arranged to selectively contact the first contact surface, a frame restricting part configured and arranged to restrict rotation of the rotation prevention member relative to a frame of a bicycle, and a hub axle restricting part configured and arranged to restrict rotation relative to the hub axle. The retaining member is attached to one of the nut member and the rotation prevention member with the retaining member being arranged to connect the nut member and the rotation prevention member together in a freely rotatable manner. The retaining member is made of an elastic wire-like material that has been bent into a C-like shape.

With this fastening mechanism, the nut member and the rotation prevention member are connected in advance by means of the retaining member. When the bicycle hub is being mounted to the frame, the rotation prevention member is oriented such that it faces the frame and turned so as to align the hub axle restricting part with the hub axle. The nut is then installed onto the hub axle to a certain degree and the rotation prevention member is aligned with the first is turned further such that the frame restricting part is aligned with the frame. The nut is then tightened until the hub axle is fastened to the frame. The rotation prevention member ensures that the hub axle is fastened to the frame with a prescribed circumferential orientation (i.e., in a prescribed rotational position). Since the nut member and the rotation prevention member can be connected together in a rotatable fashion with a retaining member, the problem of forgetting to install the rotation prevention member can be prevented. Furthermore, the hub can be fastened to the frame with a prescribed circumferential orientation by simply tightening the nut member onto the hub axle and aligning the frame and hub axle restricting parts with the frame and the hub axle, respectively. As a result, the efficiency and ease of the process of fastening the bicycle hub to the frame can be greatly improved. Additionally, since the nut member and the rotation prevention member are connected with a retaining member, the nut member and rotation prevention member can be connected together easily regardless of the structure of the restricting parts.

A bicycle hub fastening structure in accordance with a second aspect of the present invention is a bicycle hub fastening structure according to the first aspect of the present invention, wherein the nut member has a first tool engaging part provided on an external circumferential portion of the nut member. With this fastening mechanism, the nut member can be turned with a wrench or other tool that enables tightening torque to be imparted easily by engaging the tool with the external surface of the nut member. As a result, the nut member can be tightened securely using a sufficient amount of torque.

A bicycle hub fastening structure in accordance with a third aspect of the present invention is a bicycle hub fastening structure according to the first or second aspect of the present invention, wherein the nut member has a second tool engaging part provided on an axial end face of the nut member that is on the opposite side of the nut member as the first contact surface. With this fastening mechanism, the nut member can be turned with an Allen key or other tool that can be turned in a continuous fashion by engaging the tool with the end face of the nut member. As a result, the nut member can be tightened quickly.

A bicycle hub fastening structure in accordance with a fourth aspect of the present invention is a bicycle hub fastening structure according to anyone of the first to third aspects of the present invention, wherein the hub axle restricting part of the rotation prevention member is provided on an internal circumferential portion of the rotation prevention member and configured to non-rotatably engage the hub axle. With this fastening mechanism, the rotation prevention member can be prevented from rotating relative to the hub axle by the external circumferential surface of the hub axle and, thus, the rotation prevention structure is simplified.

A bicycle hub fastening structure in accordance with a fifth aspect of the present invention is a bicycle hub fastening structure according to the fourth aspect of the present invention, wherein the hub axle restricting part includes an elongated hole formed in an internal circumferential portion of the rotation prevention member with the elongated hole including a pair of parallel chamfered sections that are configured to non-rotatably corresponding chamfered sections formed on an external circumference of the hub axle. With this fastening mechanism, the hub axle can be prevented from rotating using parts that are comparatively simple to machine, i.e., chamfered sections and an elongated hole.

A bicycle hub fastening structure in accordance with a sixth aspect of the present invention is a bicycle hub fastening structure according to the fourth aspect of the present invention, wherein the hub axle restricting part includes a protruding section formed on an internal circumferential portion of the rotation prevention member that is configured to non-rotatably engage the hub axle. With this fastening mechanism, the rotation prevention member does hinder the installation of other members that the hub might include, such as a ball pushing unit.

A bicycle hub fastening structure in accordance with a seventh aspect of the present invention is a bicycle hub fastening structure according to anyone of the first to sixth aspects of the present invention, wherein the frame restricting part comprises a protrusion formed on the rotation prevention member. With this fastening mechanism, a large contact surface area can be obtained by putting the protrusion in contact with the frame and relative rotation between the hub axle and the frame can be restricted with a large force.

A bicycle hub fastening structure in accordance with an eighth aspect of the present invention is a bicycle hub fastening structure according to the seventh aspect of the present invention, wherein the protrusion protrudes from an axial end face of the rotation prevention member that is on an opposite axial side of the rotation prevention member as the second contact surface. The protrusion can be readily put in contact with the frame because the protrusion protrudes from an end face.

A bicycle hub fastening structure in accordance with a ninth aspect of the present invention is a bicycle hub fastening structure according to the seventh or eighth aspect, wherein the frame restricting part has a knurled section on an axial end face of the rotation prevention member that is on an opposite axial side of the rotation prevention member as the second contact surface. With this fastening structure, the frame restricting part can prevent rotation using the knurled section in addition to the protrusion. As a result, an even stronger restrictive force can be generated for preventing rotation.

A bicycle hub fastening structure in accordance with a tenth aspect of the present invention is a bicycle hub fastening structure according to anyone of the first to sixth aspects of the present invention, wherein the frame restricting part has a knurled section on an axial end face of the rotation prevention member that is on an opposite axial side of the rotation prevention member as the second contact surface. With this fastening mechanism, rotation can be prevented by a friction force between the knurled section and the frame and it is not necessary to machine a slit, a hole, or other such item into the frame.

A bicycle hub fastening structure in accordance with an eleventh aspect of the present invention is a bicycle hub fastening structure according to anyone of the first to tenth aspects of the present invention, wherein the rotation prevention member has an annular recess with a bottom of the annular recess forming the second contact surface, and the nut member has an annular protrusion extending into the annular recess with the first contact surface being provided on the tip end face of the annular protrusion; and the retaining member is attached to one of the annular recess and the annular protrusion. With this fastening mechanism, the annular protrusion of the nut member fits into the annular recess of the rotation prevention member and the retaining member is attached to either the annular recess or the annular protrusion. Consequently, the axial length of the nut member can be increased while keeping the fastening mechanism as a whole compact. As a result, a highly rigid connection can be obtained between the nut member and the hub axle.

A bicycle hub fastening structure in accordance with a twelfth aspect of the present invention is a bicycle hub fastening structure according to anyone of the first to tenth aspects of the present invention, wherein the nut member has an annular recess with a bottom of the annular recess forming the first contact surface, and the rotation prevention member has an annular protrusion extending into the annular recess with the second contact surface being provided on the tip end face of the annular protrusion; and the retaining member is attached to one of the annular recess and the annular protrusion. With this fastening mechanism, the annular protrusion of the rotation prevention member fits into the annular recess of the nut member and the retaining member is attached to either the annular recess or the annular protrusion. Consequently, the axial length of the rotation prevention member can be increased while keeping the fastening mechanism as a whole compact. As a result, a highly rigid connection can be obtained between the rotation prevention member and the hub axle.

A bicycle hub fastening structure in accordance with a thirteenth aspect of the present invention is a bicycle hub fastening structure according to the eleventh or twelfth aspects of the present invention, wherein the annular protrusion has an annular groove that is formed in an external circumferential surface of the annular protrusion and configured such that the retaining member can be installed therein; and the annular recess has an annular protruding section that is formed on an internal circumferential surface of the annular recess and configured to protrude radially inward. With this fastening mechanism, the annular protruding section strengthens the retaining force of the retaining member and strengthens the connection between the nut member and the rotation prevention member.

A bicycle hub fastening structure in accordance with a fourteenth aspect of the present invention is a bicycle hub fastening structure according to the eleventh or twelfth aspects of the present invention, wherein the annular recess has an annular groove formed in an internal circumferential surface of the annular recess with the retaining member being installed therein; and the annular protrusion has an annular protruding section formed on an external circumferential surface of the annular protrusion and protruding radially outward. With this fastening mechanism, the annular protruding section strengthens the retaining force of the retaining member and strengthens the connection between the nut member and the rotation prevention member.

A bicycle hub fastening structure in accordance with a fifteenth aspect of the present invention is a bicycle hub fastening structure according to anyone of the eleventh to fourteenth aspects of the present invention, wherein the retaining member is an elastic engaging member. With this fastening mechanism, the elastic engaging mechanism can be flexed in order to install it onto the nut member or the rotation prevention member. As a result, the retaining member is easier to install onto the nut member or rotation prevention member.

A bicycle hub fastening structure in accordance with a sixteenth aspect of the present invention is a bicycle hub fastening structure according to the fifteenth aspect of the present invention, wherein the elastic engaging member is a C-shaped retaining ring. This fastening mechanism offers ease of assembly while still maintaining a strong connection.

A bicycle hub fastening structure in accordance with a seventeenth aspect of the present invention is a bicycle hub fastening structure according to the sixteenth aspect of the present invention, wherein the C-shaped retaining ring is a made of an elastic wire-like material that has been bent into a C-like shape. With this fastening mechanism, the C-shaped retaining ring can be fabricated easily.

A bicycle hub fastening structure in accordance with an eighteenth aspect of the present invention is a bicycle hub fastening structure according to the sixteenth aspect of the present invention, wherein the retaining member is made of an elastic wire-like material that has been bent into a polygonal shape. With this fastening mechanism, the nut member and the rotation prevention member can be prevented from separating from each other by utilizing the difference in the distances from the center of the corners and the sides of the polygon. As a result, spaces exist along the radial direction between the retaining member and the nut member or rotation prevention member and the retaining member is easier to attach and detach.

A bicycle hub fastening structure in accordance with a nineteenth aspect of the present invention is a bicycle hub fastening structure according to anyone of the first to eighteenth aspects of the present invention, wherein the bicycle hub is an internally geared hub and the rotation prevention member serves to prevent the hub axle of the internally geared hub from rotating. With this fastening mechanism, the hub axle can be positioned so as to have a prescribed circumferential orientation with respect to the frame.

With the present invention, the nut member and the rotation prevention member are connected together in a freely rotatable manner by a connecting part having a retaining member. As a result, the problem of forgetting to install the rotation prevention member is prevented. Furthermore, the hub can be fastened to the frame with a prescribed circumferential orientation by simply tightening the nut member onto the hub axle and aligning the frame and hub axle restricting parts with the frame and the hub axle, respectively. As a result, the efficiency and ease of the process of fastening the bicycle hub to the frame can be greatly improved. Additionally, since the nut member and the rotation prevention member are connected with a retaining member, the nut member and rotation prevention member can be connected together easily regardless of the structure of the restricting parts.

These and other objects, features, aspects and advantages of the present invention will become apparent to those skilled in the art from the following detailed description, which, taken in conjunction with the annexed drawings, discloses a preferred embodiment of the present invention.

### BRIEF DESCRIPTION OF THE DRAWINGS

Referring now to the attached drawings which form a part of this original disclosure:
Figure 1 is a side elevational view of a bicycle that is equipped with an internally geared hub in accordance with one embodiment of the present invention;
Figure 2 is a cross sectional view of the internally geared hub of the bicycle illustrated in Figure 1;
Figure 3 is a half-cross-sectional view of a fastening mechanism in accordance with one embodiment of the present invention showing some parts in a cross sectional and half of the nut member in elevational;
Figure 4 is an axial elevational view of the nut member in accordance with the present invention;
Figure 5 is a half-cross-sectional view of the nut member in accordance with the present invention;
Figure 6 is an axial elevational view of the rotation prevention member in accordance with the present invention;
Figure 7 is a cross sectional view of the rotation prevention member in accordance with the present invention;
Figure 8 is a half-cross-sectional view, similar to Figure 3, of a fastening mechanism in accordance with another embodiment of the present invention showing some parts in a cross sectional and half of the nut member in elevational;
Figure 9 is a cross sectional view of the fastening mechanism illustrated in Figure 8 as seen along section line IX-IX of Figure 8;
Figure 10 is an axial elevational view, similar to Figure 6 showing still another embodiment of the present invention;
Figure 11 is a cross sectional view, similar to Figure 7 of the rotation prevention member in accordance with the present invention illustrated in Figure 10;
Figure 12 is a half-cross-sectional view, similar to Figure 3, of a fastening mechanism in accordance with still another embodiment of the present invention showing some parts in a cross sectional and half of the nut member in elevational; and
Figure 13 is a half-cross-sectional view, similar to Figure 3, of a fastening mechanism in accordance with yet another embodiment of the present invention showing some parts in a cross sectional and half of the nut member in elevational.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

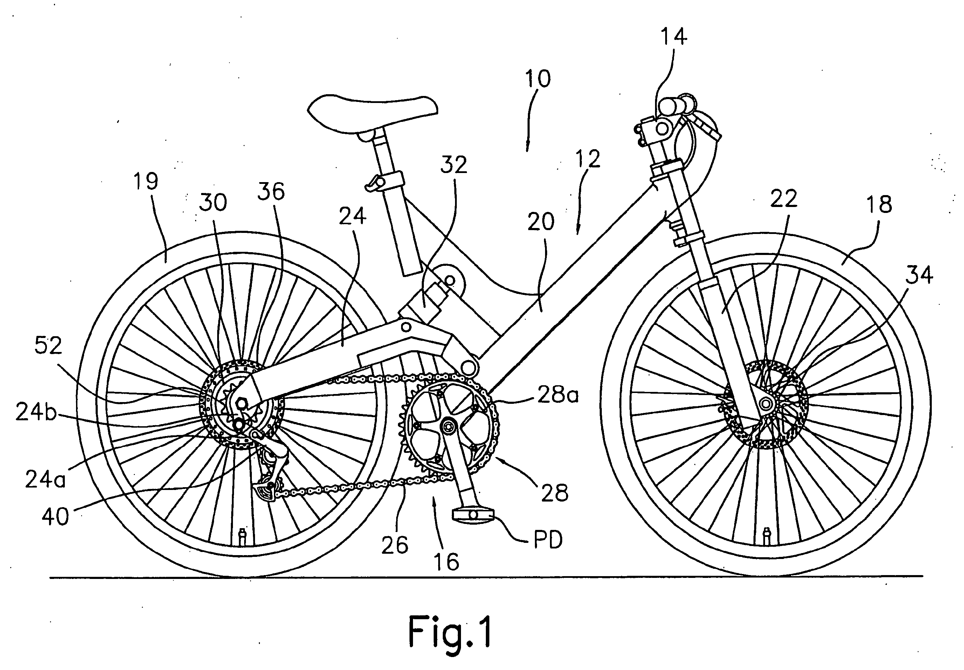

Referring initially to Figure 1, a bicycle 10 is illustrated that is equipped in accordance with a first embodiment of the present invention. The bicycle 10 basically includes a frame set 12, a handlebar unit 14, a drive unit 16, a front wheel 18 and a rear wheel 19. The frameset 12 has a frame 20, a suspension fork 22, and a rear suspension or swing arm 24. The handlebar unit 14 is fastened to the suspension fork 22. The drive unit 16 basically includes a chain 26, a crankset 28, an internally geared rear hub 30, and other components. The crankset 28 includes a pair of pedals PD and a front sprocket 28a. The front wheel 18 is mounted to the suspension fork 22. The rear wheel 19 is mounted to the rear swing arm 24. The suspension fork 22 is mounted to a frontward portion of the frame 20 such that it can rotate freely about an axis that is slanted somewhat from the vertical direction. The rear swing arm 24 has a rear suspension 32 and is mounted to a rearward portion of the frame 20 in such a fashion that it can pivot freely. The rearward ends of the rear swing arm 24 are provides with a plurality of inverted-claw-shaped rear fork ends 24a for mounting the rear wheel 19, and a hanger tab 24b that extends downward from the bottom of each of the rear fork ends 24a.

As shown in Figure 1, a front disk brake device 34 is mounted to the front wheel 18 and a rear disk brake device 36 is mounted to the rear wheel 19. The internally geared hub 30 is mounted to the rear wheel 19. A chain tensioner 40 is mounted to a hanger tab 24b of the rear swing arm 24 to apply tension to the chain 26.

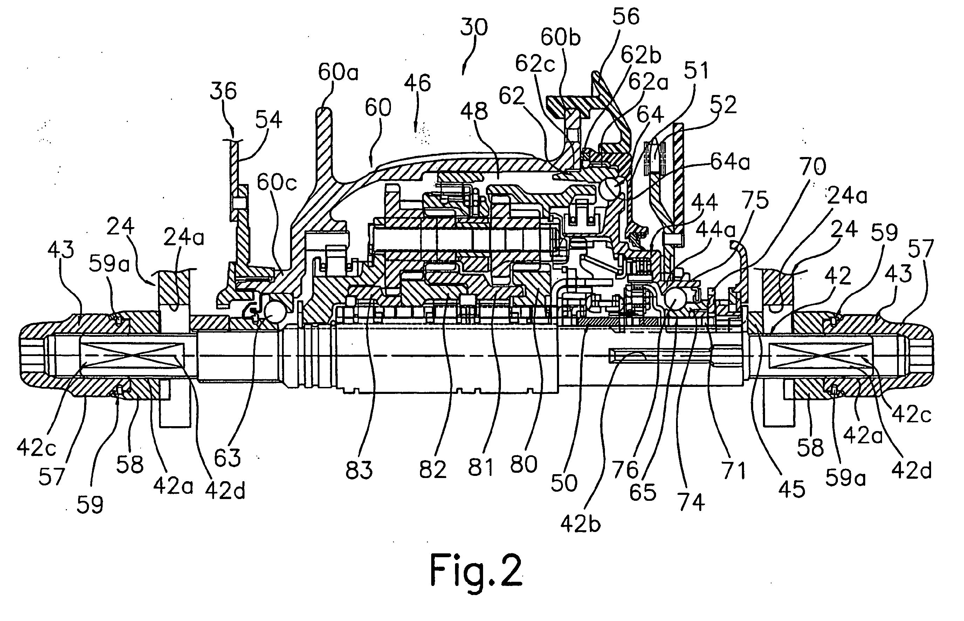

As shown in Figure 2, the internally geared hub 30 basically includes a hub axle 42 of the rear wheel 19, a generally cylindrical driver 44, a generally cylindrical hub shell 46, a transmission mechanism 48, a gear changing mechanism 50 and a cap member 51 that is installed on an end of the hub shell 46. The hub axle 42 is capable of being fastened to the rear fork ends 24a of the rear swing arm 24. The generally cylindrical driver 44 is mounted on the hub axle 42 in such a fashion that it can rotate freely. The generally cylindrical hub shell 46 is arranged around the outside circumference of the hub axle 42. The transmission mechanism 48 has a planetary gear mechanism configured to transmit forward rotation of the driver 44 to the hub shell 46 through a plurality of power transmission paths. The gear changing mechanism 50 is configured to select one of the power transmission paths at a time. The cap member 51 is installed on an end of the hub shell 46.

The internally geared hub 30 serves as a rear gear changing device and has, for example, eight speeds, i.e., eight power transmission paths. Thus, the internally geared hub 30 can transmit the rotation of the crankset 28 (Figure 1) to the hub shell 46 using anyone of eight different speeds (gear ratios). A disk rotor 54 for the rear disk break device 36 is mounted on one end of the hub shell (left end in Figure 2). A hub cover 56 is mounted to the external circumferential surface of the cap member 51.

The hub axle 42 is fastened non-rotatably and with a prescribed circumferential orientation to the rear fork ends 24a with fastening mechanisms 43 in accordance with the present invention that are screwed onto both ends of the hub axle 42. Externally threaded sections 42a for engaging with the fastening mechanisms 43 are provided on both ends of the hub axle 42. On one end of the hub axle 42, i.e., the right-hand end in Figure 2, a pressing nut 45 is installed on the externally threaded section 42a in addition to the fastening mechanism 43 for applying pressure to a ball pushing unit 74 of a bearing 65 (described later). The portion of the hub axle 42 located on the axially inward side of the externally threaded section 42a of the one end of the hub axle 42 (right end in Figure 2) is larger in diameter than the externally threaded section 42a and has a rotation prevention groove 42b formed therein. Also, a rotation prevention part 42c comprising a pair of parallel chamfered sections 42d is formed on each end of the hub axle 42 on the portions of the hub axle 42 where the externally threaded sections 42a are formed.

The driver 44 has a smaller diameter boss section 44a on one end thereof (right end in Figure 2). The driver 44 is supported rotatably on the hub axle 42 by a bearing 65 installed in the boss section 44a. The rear sprocket 52 is attached non-rotatably to the driver 44. The hub shell 46 includes a shell body 60 and a cylindrical member 62. The shell body 60 has a pair (left-right) of hub flanges 60a and 60b. The cylindrical member 62 is connected non-rotatably to an internal circumferential surface of one end of the shell body 60 (right end in Figure 2). The cap member 51 is attached to the external circumferential surface of the cylindrical member 62. The shell body 60 is generally cylindrical in shape. The shell body 60 has a smaller diameter boss section 60c on the other end (left end in Figure 2) that is rotatably supported on the hub axle 42 by a bearing 63 installed in the boss section 60c. The disk rotor 54 is fastened non-rotatably to the boss section 60c.

As shown in Figure 2, a ball bearing surface 64a is formed on the internal circumference of the cylindrical member 62 and serves as a portion of a bearing 64 for supporting one end of the hub shell 46 in a freely rotatable fashion on the driver 44. An externally threaded section 62a and an annular protrusion 62b and serrations 62c that are arranged axially inward relative to the externally threaded section 62a are formed on the external circumference of the cylindrical member 62. The cap member 51 is screwed onto the externally threaded section 62a and thereby fastened in place. The one end of the shell body 60 touches against the annular protrusion 62b, thereby positioning the shell body 60 and the cylindrical member 62 relative to each other. The serrations 62c serve to fasten the cylindrical member 62 to the internal circumferential surface of the one end of the shell body 60.

The gear changing mechanism 50 serves to control the on-off status of the sun gears 80 to 83 (four in this example) of the planetary gear mechanism of the transmission mechanism 48, where "on" refers to a state in which the sun gear cannot rotate relative to the hub axle 42 and "off" refers to a state in which the sun gear can rotate freely relative to the hub axle 42. The gear changing mechanism 50 basically comprises a cable anchoring body 70 and a cam sleeve 71. The cable anchoring body 70 is mounted on the hub axle 42 in such a fashion that it can turn freely there-about. The cable anchoring body 70 also has a gear shifting cable (not shown) anchored thereto. The cam sleeve 71 is configured and arranged to turn about the hub axle 42 when the cable anchoring body 70 turns about the hub axle 42. The cam sleeve 71 serves as a gear change operating body for executing gear change operations. The cam sleeve 71 is mounted on the external circumferential surface of the hub axle 42 in such a fashion that it can turn freely and has such a length that it can extend from the position where it engages with the cable anchoring body 70 to a position where it faces opposite the sun gear 83. The mechanism is configured such that the cam sleeve 71 turns about the hub axle 42 in eight steps of, for example, 15 degrees each. Therefore, in order to arrange the cam sleeve 71 in prescribed rotational positions (circumferential orientations) relative to the four sun gears 80 to 83, it is necessary to position the hub axle 42 such that it has a prescribed circumferential orientation relative to relative to the swing arm 24 of the frameset 12.

Each of the fastening mechanisms 43 of this embodiment comprises a nut member 57, a rotation prevention member 58 and a connecting part 59. The nut member 57 is configured such that it can screw onto an externally threaded section 42a of the hub axle 42. The rotation prevention member 58 is configured to touch against the nut member 57. The connecting part 59 is configured to connect the nut member 57 and the rotation prevention member 58 together in a freely rotatable manner.

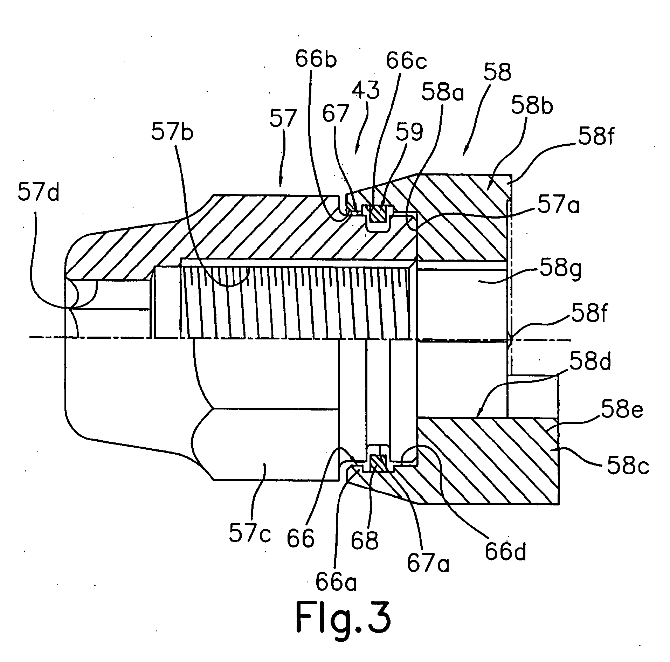

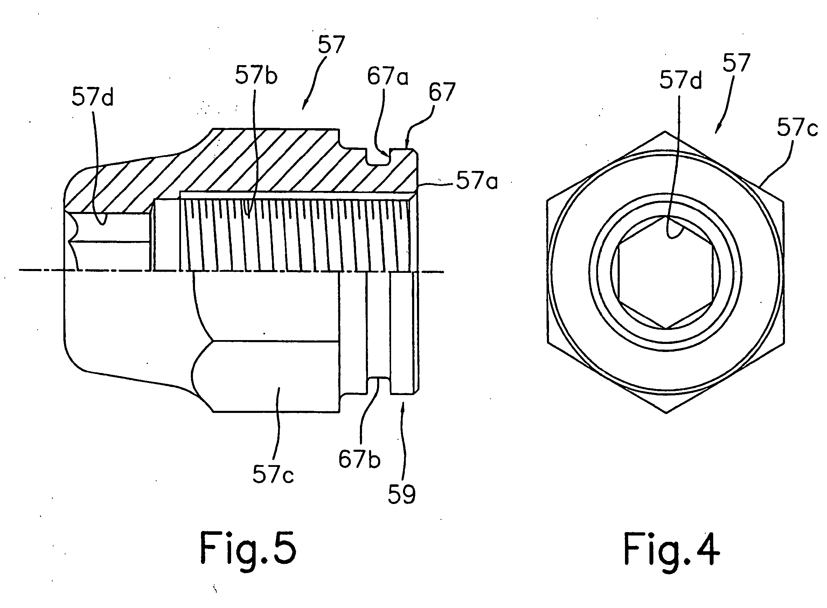

As shown in Figures 3 to 5, the nut member 57 has a first contact surface 57a that is provided on the axially inward facing end face thereof and configured to contact the rotation prevention member 58. The nut member 57 also has an internally threaded section 57b configured to engage with the externally threaded section 42a of the hub axle 42. A first tool engaging part 57c is provided on an external circumferential portion of the nut member 57, and is configured such that a first tool, e.g., a wrench, for tightening the nut member can be engaged therewith. The first tool engaging part 57c has, for example, a hexagonal shape and is provided on an intermediate portion of the nut member 57 relative to the axial direction. The external surface of the nut member 57 located on the axially outward side of the first tool engaging part 57c is tapered such that the diameter thereof gradually narrows toward the axially outward facing end face of the nut member 57. The nut member 57 has a second tool engaging part 57d provided on the axially outward facing end face thereof. The second tool engaging part 57d comprises a hexagonal hole configured such that a second tool for tightening the nut member 57, e.g., and Allen key, can be engaged therewith. Thus, the nut member 57 can be tightened using a wrench or other first tool engaged with the first tool engaging part 57c of the external circumference of the nut member 57 or using an Allen key or other second tool engaged with the second tool engaging part 57d of the axially outward facing end face.

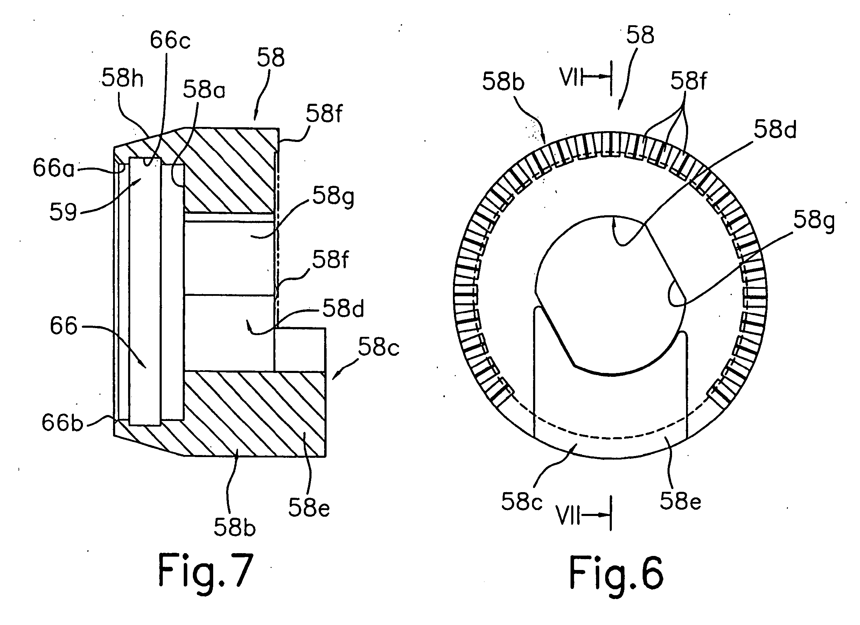

As shown in Figures 3, 6 and 7, the rotation prevention member 58 is a member capable of being mounted to the hub axle 42. The rotation prevention member 58 serves to position the hub axle 42 such that the hub axle 42 has a prescribed circumferential orientation with respect to the swing arm 24 of the frameset 12. The rotation prevention member 58 comprises a cylindrical main body 58b having a second contact surface 58a configured and arranged such that it can contact the first contact surface 57a. The external circumferential surface of an axially outward portion of the main body 58b is tapered such that the diameter thereof gradually narrows toward the nut member 57. When the external diameter of the main body 58b of the rotation prevention member 58 is larger than the maximum external diameter of the nut member 57, as in this embodiment, the tapered portion of the rotation prevention member 58 improves the external appearance of the fastening mechanism 43 by making it appear more like a single unit when the nut member 57 and the rotation prevention member 58 are connected together. The rotation prevention member 58 has a first (frame) restricting part 58c that is provided on the axially inward facing end face of the main body 58b and configured to restrict rotation relative to the swing arm 24 and a second (hub axle) restricting part 58d that is provided on an internal circumferential surface of the main body 58b and configured to restrict rotation relative to the hub axle 42. The first restricting part 58c preferably has a protrusion 58e provided on the axially inward facing end face of the main body 58b, i.e., on the opposite side of the main body 58b as the second contact surface 58a, and knurled section 58f formed on an outer circumferential portion of the axially inward facing end face of the main body 58b. The protrusion 58e is configured to protrude away from the nut member 57 and toward the slit of the rear fork end 24a of the swing arm 24 such that it can engage with the slit. The knurled section 58f comprises a plurality of saw-tooth like undulations arranged to be spaced apart from one another along the circumferential direction. As seen in Figure 6, the second restricting part 58d comprises an elongated hole 58g configured to engage with the parallel chamfered sections 42d of the hub axle 42. In other words, the elongated hole 58g is formed in an internal circumferential portion of the rotation prevention member 58 with the elongated hole 58g including a pair of parallel chamfered sections that are configured to non-rotatably corresponding chamfered sections 42d formed on an external circumference of the hub axle 42. The first restricting part 58c prevents the rotation prevention member 58 from rotating relative to the swing arm 24 of the frameset 12 and the second restricting member 58d prevents the hub axle 42 from rotating. As a result, the hub axle 42 is fastened to the swing arm 24 of the frameset 12 in such a fashion that the hub axle 42 has a prescribed circumferential orientation (rotation position) with respect to the swing arm 24.

As shown in Figures 3, 5, and 7, the connecting part 59 comprises the following: an annular recess 66 that is formed in the main body 58b of the rotation prevention member 58 and whose bottom constitutes the second contact surface 58a; an annular protrusion 67 that is formed on the nut member 57, configured to fit into the annular recess, and has the first contact surface 57a on the tip end face thereof; and a retaining member 68 that is attached to the annular protrusion 67 provided on the nut member 57.

The annular recess 66 has an annular protruding section 66a the annular recess has an annular protruding section 66a that is formed on an internal circumferential surface of the annular recess and configured to protrude radially inward. The portion of the internal circumferential surface between the axially outward facing end face and the annular protruding section 66 is preferable a tapered surface 66b. The tapered surface 66b is used to constrict the retaining member 68 when the nut member 57 is connected to the rotation prevention member 58. An annular installation groove 67a for installing the retaining member 68 is provided in the external circumferential surface (radially outward facing surface) of the annular protrusion 67. The annular installation groove 67a is formed in such a position that it is arranged further inward in the axial direction than the annular protruding section 66a when the annular protrusion 67 is touching against the annular recess 66. The retaining member 68 is an elastic engaging member configured to engage elastically with the annular recess 66. More specifically, the retaining member 68 is a C-shaped retaining ring made out of a metal wire-like material having a rectangular cross sectional shape that has been bent into a C-like shape. The retaining member, i.e. the C-shaped retaining ring 68, is preferably configured such that when it is in a natural relaxed state, the internal diameter thereof is larger than the groove diameter of the annular installation groove 67a and the external diameter thereof is the same or larger than the internal diameter of an inside section 66c located adjacent to the annular protruding section 66a and further inside the annular recess 66 than the annular protruding section 66a. It is also preferable for the C-shaped retaining ring 68 to be configured such that when it is constricted such that the internal circumferential surface thereof contacts the bottom 67b of the annular installation groove 67a, the external diameter thereof is smaller than the internal diameter of the annular protruding section 66a. Furthermore, it is preferable for a smaller diameter section 66d to be provided between the inside section 66c and the second contact surface 58a in order to enable the retaining member 58 to be aligned automatically (self-aligned) when the fastening mechanism 43 is assembled.

The process of mounting an internally geared hub 30 to the rear fork ends 24a of a swing arm 24 using two fastening mechanisms 43 configured as described above will now be explained. First, both ends of the hub axle 42 are inserted fully into the slits of the rear fork ends 24a from the open ends of the slits. Next, one of the fastening mechanisms 43 is mounted onto the externally threaded section 42a of each end of the hub axle 42 by hand. More specifically, the rotation prevention member 58 of each fastening mechanism 43 is turned such that the elongated hole 58g of the second restricting part 58d engages with the rotation prevention part 42c of the hub axle 42 and the nut member 57 is tightened until the tip end of the protrusion 58e of the first restricting part 58c contacts the side of the rear end of the swing arm 24. When the protrusion 58e contacts the swing arm 24, the rotation prevention member 58 is again turned such that the protrusion 58e engages with (fits into) the slit of the rear fork end 24a; the hub axle 42 will turn together with the rotation prevention member 58. Finally, the nut member 57 is turned further and then tightened using a first tool or a second tool. When both nut members 57 have been tightened, the mounting of the internally geared hub 30 to the frameset 12 is complete.

Since the nut member 57 and the rotation prevention member 58 can be connected together in a rotatable fashion with a connecting part 59 having a retaining member 68, the problem of forgetting to install the rotation prevention member 58 can be prevented. Furthermore, the internally geared hub 30 can be fastened to the frameset 12 with a prescribed circumferential orientation by simply tightening the nut member 57 onto the hub axle 42 and aligning the first and second restricting parts 58c, 58d with the frameset 12 and the hub axle 42, respectively. As a result, the efficiency and ease of the process of fastening the internally geared hub 30 to the frameset 12 can be greatly improved. Additionally, since the nut member 57 and the rotation prevention member 58 are connected with a retaining member 68, the nut member 57 and rotation prevention member 58 can be connected together easily regardless of the structure of the restricting parts 58c and 58d.

Additionally, since the annular protrusion 67 is provided on the nut member 57, the axial length of the nut member 57 can be increased while keeping the fastening mechanism 43 as a whole compact. As a result, a highly rigid connection can be obtained between the nut member 57 and the hub axle 42.

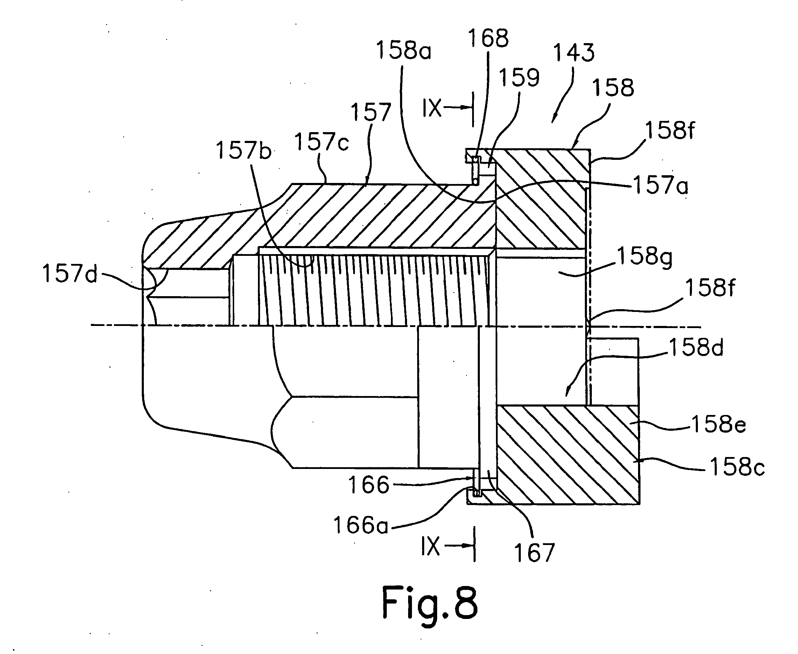

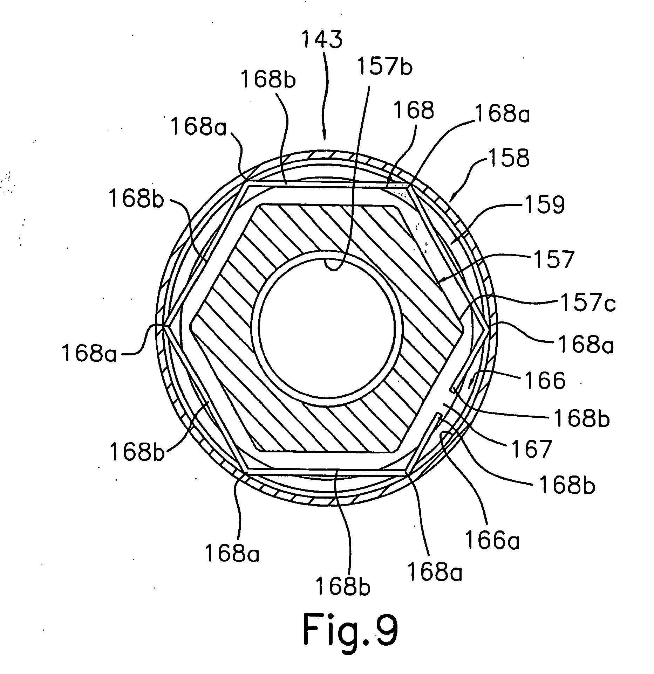

Although in the previously described embodiment the elastic engaging member that constitutes the retaining member is a C-shaped retaining ring made of a metal wire-like material that has been bent into a C-shape, the retaining member is not limited to a C-shaped retaining ring. For example, Figures 8 and 9 show another embodiment in which the retaining member is an elastic engaging member 168 comprising a metal wire-like material that has been bent into a polygonal shape (e.g., a hexagon). As shown in Figure 8, this fastening mechanism 143 comprises a nut member 157, a rotation prevention member 158, and a connecting part 159. The function of each of these components is the same as in the previous embodiment. The connecting part 159 comprises a flange-like annular protrusion 167 formed on the external circumferential surface of the end of the nut member 157 where the first contact surface 157a is provided and having a larger diameter than the first tool engaging part 157c, an annular recess 166 formed in the end face of the rotation prevention member 158 where the second contact surface 158c is provided, and an elastic engaging member 168. An annular installation groove 166a for installing the elastic engaging member 168 is formed in the internal circumferential surface of the annular recess 166.

The elastic engaging member 168 has six corners 168a and six sides 168b that join the corners 168a together. Since the elastic engaging member 168 is formed by bending a piece of elastic wire-like material, one of the six sides 168b contains the two ends of the wire-like material and is thus divided in two. The elastic engaging member 168 is secured to the annular recess 166 by the corners 168a latching into the annular installation groove 166a. Meanwhile, the sides 168b of the elastic engaging member 168 engage with the annular protrusion 167. As a result, the nut member 157 and the rotation prevention member 158 are connected together in such a fashion that they can rotate relative to each other. The other constituent features of the fastening mechanism 143 are the same as those of the previous embodiment and explanations thereof are omitted here for the sake of brevity. The reference numerals shown in Figures 8 and 9 are obtained by adding 100 to the reference numerals of equivalent members and features of the previous embodiment.

When an elastic engaging member 168 in accordance with this embodiment is used, the elastic engaging member 168 can be installed through the gap between the external circumferential surface of the nut member 157 (more specifically, the first tool engaging part 157c) and the annular recess 166 when the nut member 157 is mated closely with respect to the rotation prevention member 158. As a result, the nut member 157 and the rotation prevention member 158 can be connected together easily. Meanwhile, the nut member 157 and the rotation prevention member 158 can be disconnected from each other by grabbing the side 168b of the elastic engaging member 168 that is divided in two through the gap between the external circumferential surface of the nut member 157 and the annular recess 166. As a result, the nut member 157 and the rotation prevention member 158 can be disconnected from each other easily.

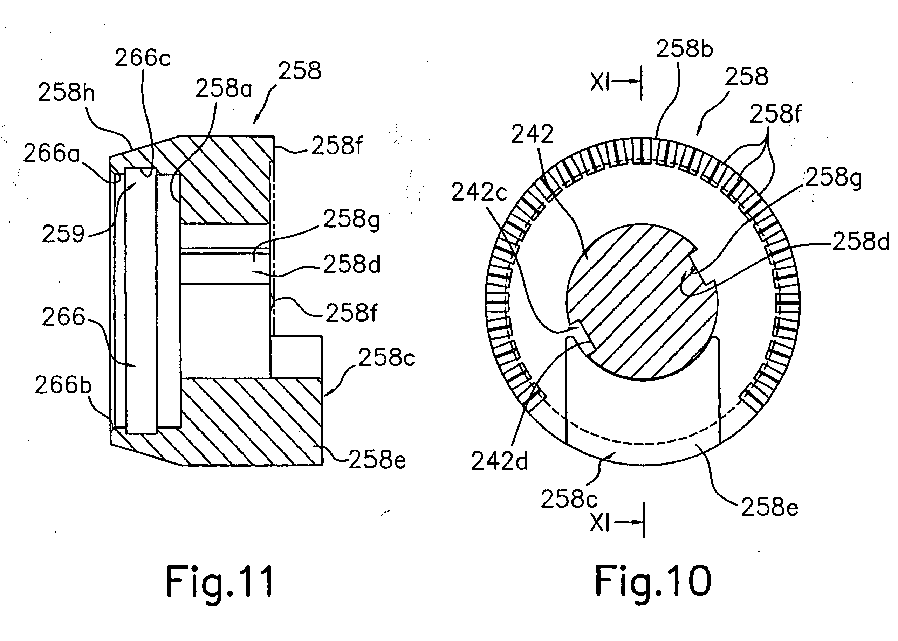

Although in the previously described embodiments, the second restricting part 58d of the rotation prevention member 58 comprises an elongated hole 58g, the present invention is not limited to such a configuration for the second restricting part 58d. Figures 10 and 11, for example, show a rotation prevention member 258 in accordance with another embodiment. In this embodiment, the second restricting part 258d comprises a pair of protruding sections 258g, each of which is formed on an internal circumferential surface of the main body 258b of the rotation prevention member 258 and configured to protrude radially inward. When this embodiment is used, a pair of rectangular grooves 242d, for example, is provided on the hub axle 242 to engage with the protruding sections and prevent the rotation prevention member 258 from rotating relative to the hub axle 242. The other constituent features of the rotation prevention member 258 are the same as those of the previous embodiment and explanations thereof are omitted here for the sake of brevity. The reference numerals shown in Figures 10 and 11 are obtained by adding 200 to the reference numerals of equivalent members and features of the previous embodiment.

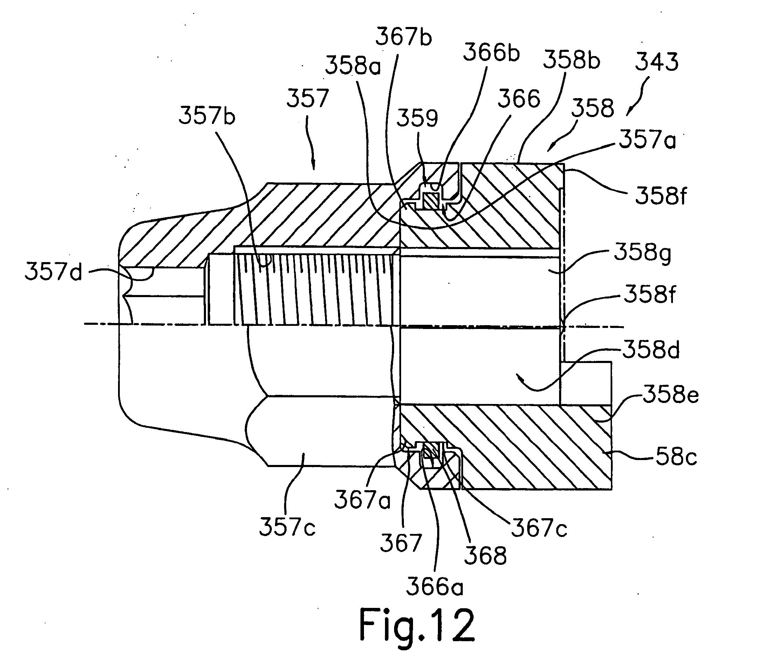

Although in the previous embodiments, the annular recess 66 is provided in the rotation prevention member 58, it is also acceptable to provide an annular recess in the nut member 57. For example, Figure 12 shows another embodiment in which the connecting part 359 comprises the following: an annular recess 366 that is formed in the nut member 357 and whose bottom constitutes a first contact surface 357a; an annular protrusion 367 that is formed on the rotation prevention member 358, configured such that it can fit into the annular recess 366, and has a second contact surface 358a provided on the tip end face thereof; and a retaining member 368 that is attached to the annular recess 366 formed in the nut member 357. The retaining member 368 is a C-shaped retaining ring 368 and an annular installation groove 366a for installing the C-shaped retaining ring 368 is formed in an internal circumferential surface of the annular recess 366. Also, an annular protruding section 367a configured to protrude in the radially outward direction is formed on the external circumferential surface the end of the annular protrusion 367 where the second contact surface 358a is provided. Preferably, a tapered surface 367b is provided between the second contact surface 358a and the annular protruding section 367a. The tapered surface 367b is used to expand the retaining member 368 when the rotation prevention member 358 is connected to the nut member 357.

The annular installation groove 366a is formed in such a position that it is arranged further inward in the axial direction than the annular protruding section 367a when the annular protrusion 367 is touching against the annular recess 366. The retaining member 368 is an elastic engaging member configured to engage elastically with the annular protrusion 367. More specifically, the retaining member 368 is a C-shaped retaining ring made out of a metal wire-like material having a rectangular cross sectional shape that has been bent into a C-like shape. The retaining member, i.e. the C-shaped retaining ring 68, is preferably configured such that when it is in a natural relaxed state, the external diameter thereof is smaller than the groove diameter of the annular installation groove 366a and the internal diameter thereof is the same or smaller than the internal diameter of an inside section 367c located adjacent to the annular protruding section 367a and further inside the annular recess 366 than the annular protruding section 367a. It is also preferable for the C-shaped retaining ring 368 to be configured such that when it is expanded such that the external circumferential surface thereof contacts the bottom 366b of the annular installation groove 366a, the internal diameter thereof is larger than the external diameter of the annular protruding section 367a.

With this fastening mechanism 343, since the annular protrusion 367 is provided on the rotation prevention member 358, the axial length of the rotation prevention member 358 can be increased while keeping the fastening mechanism 343 as a whole compact. As a result, a highly rigid connection can be obtained between the rotation prevention member 358 and the hub axle 42.

Although in this embodiment, the annular installation groove 367a is formed in the annular protrusion 367, it is also acceptable to form the annular installation groove in the annular recess, as is done in the previously described embodiment. Likewise, in the previously described embodiment, it is acceptable to form the annular installation groove in the annular protrusion.

The other constituent features of the fastening mechanism 343 are the same as those of the previously described embodiment and explanations thereof are omitted here for the sake of brevity. The reference numerals shown in Figure 12 are obtained by adding 300 to the reference numerals of equivalent members and features of the previous embodiment.

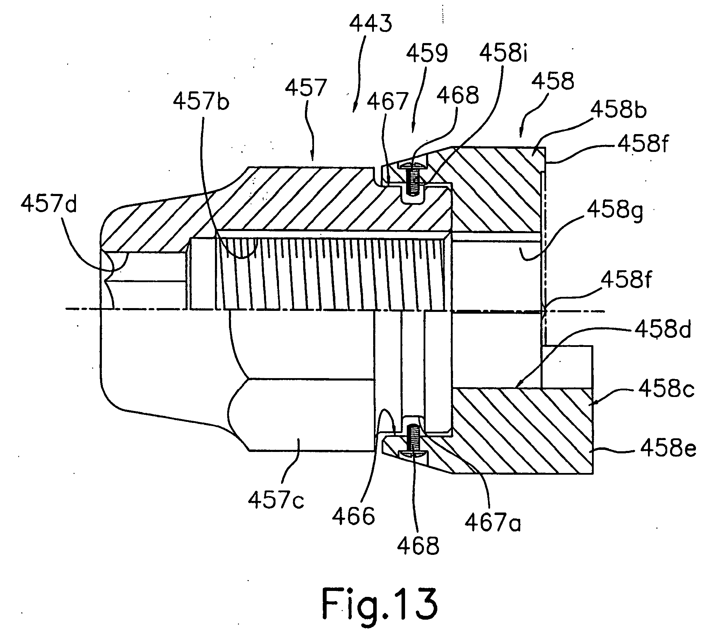

Although in the previously described embodiments, the retaining member comprises an elastic engaging member, the retaining member is not limited to an elastic engaging member and any member that serves the function of preventing the connecting part from becoming disconnected is acceptable. For example, Figure 13 shows another embodiment of a fastening structure 443 in which the retaining member of the connecting part 459 comprises a plurality of screw members that are installed from the external circumferential surface of the rotation prevention member 458 and directed toward the annular recess 466. The screw members, i.e., the retaining members 468, are installed into a plurality of threaded holes 458i that are formed in the external circumferential surface of the main body 458b of the rotation prevention member 458 so as to be spaced apart from each other along a circumferential direction and arranged in a radial fashion. The threaded holes 458i are formed in such positions that they can be aligned with an annular retaining (disconnection prevention) groove 467a. The screw members, i.e., the retaining members 468, are made to such a length that the tips thereof can extend into the annular retaining groove 467a when the screw members 468 are installed into the threaded holes 458i.

The other constituent features of the fastening mechanism 443 are the same as those of the previously described embodiment and explanations thereof are omitted here for the sake of brevity. The reference numerals shown in Figure 13 are obtained by adding 400 to the reference numerals of equivalent members and features of the previous embodiment.

Although the previously described embodiments apply the invention to an internally geared hub for a bicycle, the invention is not limited to internally geared hubs for bicycles. The invention can be applied to any hub that requires the hub axle to be fastened with a prescribed circumferential orientation (rotational position).

Although in the previously described embodiments, the first restricting part 58c comprises a protrusion 58e and a knurled section 58f, it is acceptable for the first restricting part to comprise only one or the other, i.e., only the protrusion 58e or only the knurled section 58f.

### GENERAL INTERPRETATION OF TERMS

In understanding the scope of the present invention, the term "configured" as used herein to describe a component, section or part of a device includes hardware and/or software that is constructed and/or programmed to carry out the desired function. In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts. As used herein to describe the present invention, the following directional terms "forward, rearward, above, downward, vertical, horizontal, below and transverse" as well as any other similar directional terms refer to those directions of a bicycle equipped with the present invention. Accordingly, these terms, as utilized to describe the present invention should be interpreted relative to a bicycle equipped with the present invention as used in the normal riding position. In the forgoing explanations, the term "elastic" is used to refer to the material property whereby a member or part undergoes a change in size and/or shape when subjected to an external force and attempts to regain its original size and/or shape when the external force is removed. In other words, as used in herein, the term "elastic" includes both cases in which the member or part regains its original size and/or shape completely when the external force is removed and cases in which the member or part does not regain its original size and/or shape completely but does at least attempt to do so. Finally, terms of degree such as "substantially", "about" and "approximately" as used herein mean a reasonable amount of deviation of the modified term such that the end result is not significantly changed. For example, these terms can be construed as including a deviation of at least ± 5% of the modified term if this deviation would not negate the meaning of the word it modifies.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents.

## Claims

1. A bicycle hub fastening structure comprising:
a nut member (57; 157; 357) including an internally threaded bore and a first contact surface; a rotation prevention member (58; 158; 258; 358) including a second contact surface arranged to selectively contact the first contact surface, and a hub axle restricting part configured and arranged to restrict rotation relative to a hub axle of a bicycle hub; and
a retaining member (68; 168; 368; 468) attached to one of the nut member (57; 157; 357) and the rotation prevention member (58; 158; 258; 358) with the retaining member (68; 168; 368; 468) being arranged to connect the nut member (57; 157; 357) and the rotation prevention member (58; 158; 258; 358) together in a freely rotatable manner; **characterized in that**
the rotation prevention member (58; 158; 258; 358) includes a frame restricting part that is configured and arranged to restrict rotation of the rotation prevention member (58; 158; 258; 358) relative to a frame of a bicycle and **in that** the retaining member (68; 168; 368; 468) is made of an elastic wire-like material that has been bent into a C-like shape.

2. The bicycle hub fastening structure recited in claim 1, wherein
the nut member (57; 157; 357) has a first tool engaging part provided on an external circumferential portion of the nut member (57; 157; 357), and/or a second tool engaging part provided on an axial end face of the nut member (57; 157; 357) that is on the opposite side of the nut member (57; 157; 357) as the first contact surface.

3. The bicycle hub fastening structure as recited in claim 1 or 2, wherein
the hub axle restricting part of the rotation prevention member (58; 158; 258; 358) is provided on an internal circumferential portion of the rotation prevention member (58; 158; 258; 358) and configured to non-rotatably engage the hub axle, in particular the hub axle restricting part includes an elongated hole formed in an internal circumferential portion of the rotation prevention member (58; 158; 258; 358) with the elongated hole including a pair of parallel chamfered sections that are configured to non-rotatably corresponding chamfered sections formed on an external circumference of the hub axle and/or a protruding section formed on an internal circumferential portion of the rotation prevention member (58; 158; 258; 358) that is configured to non-rotatably engage the hub axle.

4. The bicycle hub fastening structure as recited in any one of claims 1 to 3, wherein
the frame restricting part comprises a protrusion formed on the rotation prevention member (58; 158; 258; 358), in particular protruding from an axial end face of the rotation prevention member (58; 158; 258; 358) that is on an opposite axial side of the rotation prevention member (58; 158; 258; 358) as the second contact surface.

5. The bicycle hub fastening structure as recited in any one of claims 1 to 4, wherein
the frame restricting part has a knurled section on an axial end face of the rotation prevention member (58; 158; 258; 358) that is on an opposite axial side of the rotation prevention member (58; 158; 258; 358) as the second contact surface.

6. The bicycle hub fastening structure as recited in any one of claims 1 to 5, wherein
one of the rotation prevention member (58; 158; 258; 358) and the nut member (57; 157; 357) has an annular recess with a bottom of the annular recess forming one of the first and second contact surfaces, and the other of the rotation prevention member (58; 158; 258; 358) and the nut member (57; 157; 357) has an annular protrusion extending into the annular recess with the other of the first and second contact surfaces being provided on the tip end face of the annular protrusion; and
the retaining member (68; 168; 368; 468) is attached to one of the annular recess and the annular protrusion.

7. The bicycle hub fastening structure as recited in claim 6, wherein
the annular protrusion has an annular groove that is formed in an external circumferential surface of the annular protrusion and configured such that the retaining member (68; 168; 368; 468) can be installed therein; and
the annular recess has an annular protruding section that is formed on an internal circumferential surface of the annular recess and configured to protrude radially inward.

8. The bicycle hub fastening structure as recited in claim 6, wherein
the annular recess has an annular groove formed in an internal circumferential surface of the annular recess with the retaining member (68; 168; 368; 468) being installed therein; and
the annular protrusion has an annular protruding section formed on an external circumferential surface of the annular protrusion and protruding radially outward.

9. The bicycle hub fastening structure as recited in any one of claims 1 to 8, wherein
the retaining member (68; 168; 368; 468) is an elastic engaging member, in particular a C-shaped retaining ring.

10. The bicycle hub fastening structure as recited in any one of claims 1 to 9, wherein
the retaining member (68; 168; 368; 468) is a made of an elastic wire-like material that has been bent into a C-like shape, in particular polygonal shape.

11. A bicycle hub comprising:
a hub axle configured and arranged to be fastened to a frame of a bicycle;
a hub shell rotatably supported around an outside circumference of the hub axle; and
a hub fastening structure as recited in any one of claims 1 to 10 mounted on the hub axle, the nut member (57; 157; 357) being threaded onto the hub axle.

## Patentansprüche

1. Fahrradnabenbefestigungsstruktur, umfassend:
ein Mutterelement (57; 157; 357), umfassend eine Innengewindebohrung und eine erste Kontaktfläche;
ein Drehverhinderungselement (58; 158; 258; 358), umfassend eine zweite Kontakt fläche, angeordnet, um wahlweise die erste Kontaktfläche zu kontaktieren, und einen Nabenachseneinschränkpart, konfiguriert und angeordnet, um eine Drehung relativ zu einer Nabenachse einer Fahrradnabe einzuschränken; und
ein Halteelement (68; 168; 368; 468), angebracht an eines von dem Mutterelement (57; 157; 357) und dem Drehverhinderungselement (58; 158; 258; 358), wobei das Halteelement (68; 168; 368; 468) angeordnet ist, um das Mutterelement (57; 157; 357) und das Drehverhinderungselement (58; 158; 258; 358) zusammen zu verbinden auf eine frei drehbare Art und Weise; **dadurch gekennzeichnet, dass**
das Drehverhinderungselement (58; 158; 258; 358) einen Rahmeneinschränkpart um fasst, der konfiguriert und angeordnet ist, um eine Drehung des Drehverhinderungselements (58; 158; 258; 358) relativ zu einem Rahmen eines Fahrrads einzuschränken, und **dadurch**, dass das Haltelement (68; 168; 368; 468) aus einem elastischen drahtähnlichen Material gebildet ist, gebogen in eine C-förmige Gestalt.

2. Fahrradnabenbefestigungsstruktur gemäß Anspruch 1, wobei das Mutterelement (57; 157; 357) einen ersten Werkzeugeingriffspart hat, bereitgestellt an einem Außenumfangsabschnitt des Mutterelements (57; 157; 357) und/oder einen zweiten Werkzeug eingriffspart, bereitgestellt an einer Axialendfläche des Mutterelements (57; 157; 357), angeordnet an der gegenüberstehenden Seite des Mutterelements (57; 157; 357) wie die erste Kontaktfläche.

3. Fahrradnabenbefestigungsstruktur gemäß Anspruch 1 oder 2, wobei der Nabenachseneinschränkpart des Drehverhinderungselements (58; 158; 258; 358) bereitgestellt ist an einem Innenumfangsabschnitt des Drehverhinderungselements (58; 158; 258; 358) und konfiguriert ist, um nicht drehbar mit der Nabenachse einzugreifen, wobei insbe sondere der Nabenachseneinschränkpart ein längliches Loch umfasst, ausgebildet in einem Innenumfangsabschnitt des Drehverhinderungselements (58; 158; 258; 358), wobei das längliche Loch ein Paar paralleler gefaster Sektionen umfasst, konfiguriert, nicht drehbar entsprechend gefaster Sektionen, ausgebildet an einem Außenumfang der Nabenachse und/oder einer vorragenden Sektion, ausgebildet an einem Innenumfangsabschnitt des Drehverhinderungselements (58; 158; 258; 358), konfiguriert, um nicht drehbar mit der Nabenachse einzugreifen.

4. Fahrradnabenbefestigungsstruktur gemäß einem der Ansprüche 1 bis 3, wobei der Rahmeneinschränkpart einen Vorsprung umfasst, ausgebildet an dem Drehverhinderungselement (58; 158; 258; 358), insbesondere vorragend von einer Axialendfläche des Drehverhinderungselements (58; 158; 258; 358), angeordnet an einer der zweiten Kontaktfläche gegenüberstehenden Axialseite des Drehverhinderungselements (58; 158; 258; 358).

5. Fahrradnabenbefestigungsstruktur gemäß einem der Ansprüche 1 bis 4, wobei der Rahmeneinschränkpart eine Rändelsektion an einer Axialendfläche des Drehverhinderungselements (58; 158; 258; 358) aufweist, angeordnet an einer der zweiten Kontakt fläche gegenüberstehenden Axialseite des Drehverhinderungselements (58; 158; 258; 358).

6. Fahrradnabenbefestigungsstruktur gemäß einem der Ansprüche 1 bis 5, wobei
eines von dem Drehverhinderungselement (58; 158; 258; 358) und dem Mutterelement (57; 157; 357) eine ringförmige Aussparung hat, wobei ein Boden der ringförmigen Aussparung eine von den ersten und zweiten Kontaktflächen ausbildet, und das andere von dem Drehverhinderungselement (58; 158; 258; 358) und dem Mutterelement (57; 157; 357) einen ringförmigen Vorsprung hat, sich erstreckend in die ringförmige Aussparung, wobei die andere von den ersten und zweiten Kontaktflächen bereitgestellt ist an der Spitzendfläche des ringförmigen Vorsprungs; und
das Halteelement (68; 168; 368; 468) angebracht ist an einem von der ringförmigen Aussparung und dem ringförmigen Vorsprung.

7. Fahrradnabenbefestigungsstruktur gemäß Anspruch 6, wobei der ringförmige Vorsprung eine ringförmige Nut hat, ausgebildet in einer Außenumfangsfläche des ringförmigen Vorsprungs und so konfiguriert, dass das Halteelement (68; 168; 368; 468) darin installiert werden kann; und
die ringförmige Aussparung eine ringförmige vorragende Sektion hat, ausgebildet an einer Innenumfangsfläche der ringförmigen Aussparung und konfiguriert, um radial einwärts vorzuragen.

8. Fahrradnabenbefestigungsstruktur gemäß Anspruch 6, wobei die ringförmige Aussparung eine ringförmige Nut hat, ausgebildet in einer Innenumfangsfläche der ringförmigen Aussparung, wobei das Halteelement (68; 168; 368; 468) darin installiert ist; und
der ringförmige Vorsprung eine ringförmige vorspringende Sektion hat, ausgebildet an einer Außenumfangsfläche des ringförmigen Vorsprungs und vorragend radial auswärts.

9. Fahrradnabenbefestigungsstruktur gemäß einem der Ansprüche 1 bis 8, wobei das Halteelement (68; 168; 368; 468) ein elastisches Eingriffselement ist, insbesondere ein C-förmiger Haltering.

10. Fahrradnabenbefestigungsstruktur gemäß einem der Ansprüche 1 bis 9, wobei das Halteelement (68; 168; 368; 468) aus einem elastischen drahtähnlichen Material gebildet ist, gebogen in eine C-ähnliche Gestalt, insbesondere polygonale Gestalt.

11. Fahrradnabe, umfassend:
eine Nabenachse, konfiguriert und angeordnet, um an einen Rahmen eines Fahrrads befestigt zu werden;
eine Nabenhülse, drehbar gehalten um einen Außenumfang der Nabenachse; und
eine Nabenbefestigungsstruktur gemäß einem der Ansprüche 1 bis 10, montiert an der Nabenachse, wobei das Mutterelement (57; 157; 357) auf die Nabenachse geschraubt ist.

## Revendications

1. Structure de fixation de moyeu de bicyclette comprenant:
un élément d'écrou (57 ; 157 ; 357) comprenant un alésage fileté interne et une première surface de contact ;
un élément de prévention de rotation (58 ; 158 ; 258 ; 358), comprenant une deuxième surface de contact agencée pour être en contact de manière sélective avec la première surface de contact, et une partie de restriction d'axe de moyeu configurée et agencée pour restreindre la rotation par rapport à un axe de moyeu d'un moyeu de bicyclette ; et
un élément de retenue (68 ; 168 ; 368 ; 468) attaché à l'un de l'élément d'écrou (57 ; 157 ; 357) et de l'élément de prévention de rotation (58 ; 158 ; 258 ; 358), l'élément de retenue (68 ; 168 ; 368 ; 468) étant agencé pour relier l'élément d'écrou (57 ; 157 ; 357) et l'élément de prévention de rotation (58 ; 158 ; 258 ; 358) ensemble, en rotation libre ; **caractérisé en ce que**
l'élément de prévention de rotation (58 ; 158 ; 258 ; 358) comprend une partie de restriction de cadre qui est configurée et agencée pour restreindre la rotation de l'élément de prévention de rotation (58 ; 158 ; 258 ; 358) par rapport à un cadre d'une bicyclette, et **en ce que** l'élément de retenue (68 ; 168 ; 368 ; 468) est fait d'un matériau similaire à un fil élastique qui a été courbé dans une forme de C.

2. Structure de fixation d'un moyeu de bicyclette selon la revendication 1, dans laquelle l'élément d'écrou (57 ; 157 ; 357) a une première partie d'engagement d'outil fournie sur une partie circonférentielle externe de l'élément d'écrou (57 ; 157 ; 357), et/ou une deuxième partie d'engagement d'outil fournie sur une surface d'extrémité axiale de l'élément d'écrou (57 ; 157 ; 357) qui est sur le côté opposé de l'élément d'écrou (57 ; 157 ; 357) par rapport à la première surface de contact.

3. Structure de fixation de moyeu de bicyclette selon la revendication 1 ou 2, dans laquelle la partie de restriction d'axe de moyeu de l'élément de prévention de rotation (58 ; 158 ; 258 ; 358) est fournie sur une partie circonférentielle interne de l'élément de prévention de rotation (58 ; 158 ; 258 ; 358) et configurée pour engager de manière non rotative l'axe de moyeu, en particulier la partie de restriction d'axe de moyeu comprend un trou élongé formé dans une partie circonférentielle interne de l'élément de prévention de rotation (58 ; 158 ; 258 ; 358), le trou élongé comprenant une paire de sections biseautées parallèles qui sont configurées pour des sections biseautées correspondantes non rotatives formées sur une circonférence externe de l'axe de moyeu et/ou une section en saillie formée sur une partie circonférentielle interne de l'élément de prévention et de rotation (58 ; 158 ; 258 ; 358) qui est configurée pour engager de manière non rotative l'axe de moyeu.

4. Structure de fixation de moyeu de bicyclette selon l'une quelconque des revendications 1 à 3, dans laquelle la partie de restriction de cadre comprend une saillie formée sur l'élément de prévention de rotation (58 ; 158 ; 258 ; 358), en particulier faisant saillie depuis une face d'extrémité axiale de l'élément de prévention de rotation (58 ; 158 ; 258 ; 358) qui est sur un côté axial opposé de l'élément de prévention de rotation (58 ; 158 ; 258 ; 358) par rapport à la deuxième surface de contact.

5. Structure de fixation de moyeu de bicyclette selon l'une quelconque des revendications 1 à 4, dans laquelle la partie de restriction de cadre a une section moletée sur une face d'extrémité axiale de l'élément de prévention de rotation (58 ; 158 ; 258 ; 358), qui est sur un côté axial opposé de l'élément de prévention de rotation (58 ; 158 ; 258 ; 358) par rapport à la deuxième surface de contact.

6. Structure de fixation de moyeu de bicyclette selon l'une quelconque des revendications 1 à 5, dans laquelle l'un de l'élément de prévention de rotation (58 ; 158 ; 258 ; 358) et de l'élément d'écrou (57 ; 157 ; 357) a un évidement annulaire avec un fond de l'évidement annulaire formant l'une des première et deuxième surfaces de contact et l'autre de l'élément de prévention de rotation (58 ; 158 ; 258 ; 358) et de l'élément d'écrou (57 ; 157 ; 357) a une saillie annulaire s'étendant dans l'évidement annulaire, l'autre des première et deuxième surfaces de contact étant fournies sur la face d'extrémité de la saillie annulaire et
l'élément de retenue (68 ; 168 ; 368 ; 468) est attaché à l'un de l'évidement annulaire et de la saillie annulaire.

7. Structure de fixation de moyeu de bicyclette selon la revendication 6, dans laquelle
la saillie annulaire a une rainure annulaire qui est formée dans une surface circonférentielle externe de la saillie annulaire et qui est configurée de sorte que l'élément de retenue (68 ; 168 ; 368 ; 468) puisse y être installé ; et
l'évidement annulaire a une section en saillie annulaire qui est formée sur une surface circonférentielle interne de l'évidement annulaire et qui est configurée pour faire saillie radialement vers l'intérieur.

8. Structure de fixation de moyeu de bicyclette selon la revendication 6, dans laquelle l'évidement annulaire a une rainure annulaire formée dans une surface circonférentielle interne de l'évidement annulaire, avec l'élément de retenue (68 ; 168 ; 368 ; 468) qui y est installé ; et
la saillie annulaire a une section en saillie annulaire formée sur une surface circonférentielle externe de la saillie annulaire et faisant saillie radialement vers l'extérieur.

9. Structure de fixation de moyeu de bicyclette selon l'une quelconque des revendications 1 à 8, dans laquelle l'élément de retenue (68 ; 168 ; 368 ; 468) est un élément d'engagement élastique, en particulier une bague de retenue en forme de C.

10. Structure de fixation de moyeu de bicyclette selon l'une quelconque des revendications 1 à 9, dans laquelle l'élément de retenue (68 ; 168 ; 368 ; 468) est fait d'un matériau similaire à un fil élastique qui a été courbé dans une forme de C, en particulier une forme polygonale.

11. Moyeu de bicyclette comprenant :
un axe de moyeu configuré et agencé pour être attaché à un cadre d'une bicyclette ;
un carter de moyeu supporté rotatif autour d'une circonférence extérieure de l'axe de moyeu ; et
une structure de fixation de moyeu selon l'une quelconque des revendications 1 à 10, montée sur l'axe de moyeu, l'élément d'écrou (57 ; 157 ; 357) étant fileté sur l'axe de moyeu.
